# EUROPEAN PATENT SPECIFICATION

(11) **EP 3 040 805 B1**
(45) Date of publication and mention of the grant of the patent: **03.07.2019**
(21) Application number: 16150230.7
(22) Date of filing: 05.01.2016
(51) Int. Cl.: G06F 1/30, G06F 1/26, H02J 7/02, H02J 50/10, H02J 50/40, H02J 50/80

(54) **INFORMATION PROCESSING APPARATUS, PERIPHERAL DEVICE AND NON-CONTACT POWER SUPPLY SYSTEM**
INFORMATIONSVERARBEITUNGSVORRICHTUNG, PERIPHERIEVORRICHTUNG UND KONTAKTLOSES STROMVERSORGUNGSSYSTEM
APPAREIL DE TRAITEMENT D'INFORMATIONS, DISPOSITIF PÉRIPHÉRIQUE ET SYSTÈME D'ALIMENTATION ÉLECTRIQUE SANS CONTACT

(30) Priority: 05.01.2015 JP 2015000545
(43) Date of publication of application: 06.07.2016
(73) Proprietor: Toshiba TEC Kabushiki Kaisha, 141-8562 Tokyo (JP)
(72) Inventor: HIROSE, Takashi, Shinagawa-ku, Tokyo 141-0032 (JP)
(74) Representative: Fédit-Loriot

(56) References cited:
- US-A- 5 915 118
- US-A1- 2009 108 679
- US-A1- 2011 016 333
- US-A1- 2015 002 086

## Description

### FIELD

Embodiments described herein relate to an information processing apparatus, a peripheral device and a non-contact power supply system including the information processing apparatus and the peripheral device.

### BACKGROUND

A non-contact power supply system which transfers electric power without using a power cable is being used in recent years. With the use of the resonance phenomenon of an electromagnetic field, the non-contact power supply system can supply electric power to a secondary battery carried on a personal computer and an AV (Audio Visual) device. In this case, the secondary battery is desired to be small to achieve lower cost.

US 2011/016 333 A1 discloses a computer receiving power from or providing power to an unspecified device by using, for example, a wireless power transfer link.

US 2009/108 679 A1 discloses wireless energy transfer between a plurality of electronic devices.

US 5 915 118 A discloses a system using, if the supply of electric power from a power supply cable is interrupted, a chargeable battery in order to effect a normal shutdown.

### DESCRIPTION OF THE DRAWINGS

Fig. 1 is a diagram illustrating the structure of a POS system according to an embodiment:
Fig. 2 is a block diagram exemplifying the hardware structure of a POS terminal:
Fig. 3 is a block diagram exemplifying the hardware structure of a peripheral device;
Fig. 4 is a diagram illustrating the functional structure of the POS system;
Fig. 5 is a flowchart illustrating the flow of a mode change processing;
Fig. 6 is a flowchart illustrating the flow of a power transmission mode processing; and
Fig. 7 is a flowchart illustrating the flow of a power receiving mode processing.

### DETAILED DESCRIPTION

The invention is defined by the appended independent claim 1. A further aspect of the invention is outlined in the dependent claim 2. Embodiments which do not fall within the scope of the claims do not form part of the present invention.

Embodiments of the information processing apparatus, the peripheral device and the non-contact power supply system are described below in detail as non-limiting examples, with reference to the accompanying drawings. Further, the embodiments described hereinafter are only embodiments of the information processing apparatus, the peripheral device and the non-contact power supply system but the structures and specifications those of are not limited with such embodiments. The present embodiments are examples of the application of the non-contact power supply system to a POS (Point Of Sale) system which is introduced into a store such as a supermarket for the sales registration and settlement of the commodities relating to a transaction.

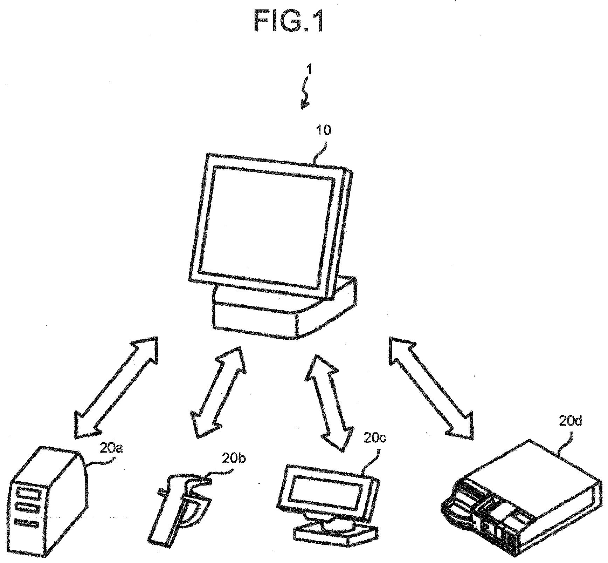

Fig. 1 is a diagram illustrating the structure of a POS system 1 according to the present embodiment. The POS system 1 comprises a POS terminal 10 and peripheral devices 20a, 20b, 20c and 20d. The POS system 1 enables the POS terminal 10 to be communicated with the peripheral devices 20a, 20b, 20c and 20d through a wireless connection.

The POS terminal 10 is an information processing apparatus for executing a commodity sales data processing. The peripheral device 20a is, for example, a printer which prints, on a specific paper such as a receipt paper, the content of a transaction as a receipt. The peripheral device 20b is, for example, a code scanner which optically reads a barcode representing a commodity code. The peripheral device 20c is, for example, a display device such as a liquid crystal display which displays various kinds of information for a customer. The peripheral device 20d is, for example, an automatic change dispensing machine which receives deposited money and automatically dispenses money (change) according to a command (change dispensing command) from the POS terminal 10. The peripheral devices 20a, 20b, 20c and 20d, if not distinguished from one another, are collectively described hereinafter as a peripheral 20. Further, the peripheral 20 is not limited to those devices described above. The POS system 1 may further comprise other devices. The POS system 1 is usable as long as provided with more than one peripheral 20.

In a case in which the POS terminal 10 receives the supply of electric power from a power source such as a power outlet through a power cable, the POS system 1 supplies electric power to the peripheral 20 from the POS terminal 10 in a non-contact manner (hereinafter referred to as a power transmission). Moreover, in a case in which the electric power supply for the POS terminal 10 is stopped, the POS terminal 10 of the POS system 1 receives electric power supplied from the peripheral 20 in a non-contact manner (hereinafter referred to as a power reception). In this way, the POS terminal 10 can receive electric power required for completing a shutdown. The 'non-contact' is a common meaning of connection without using any mechanical connection. For example, the POS terminal 10 is not connected with the peripheral 20 through a wire or a connector.

Sequentially, the hardware structure of each foregoing device is described.

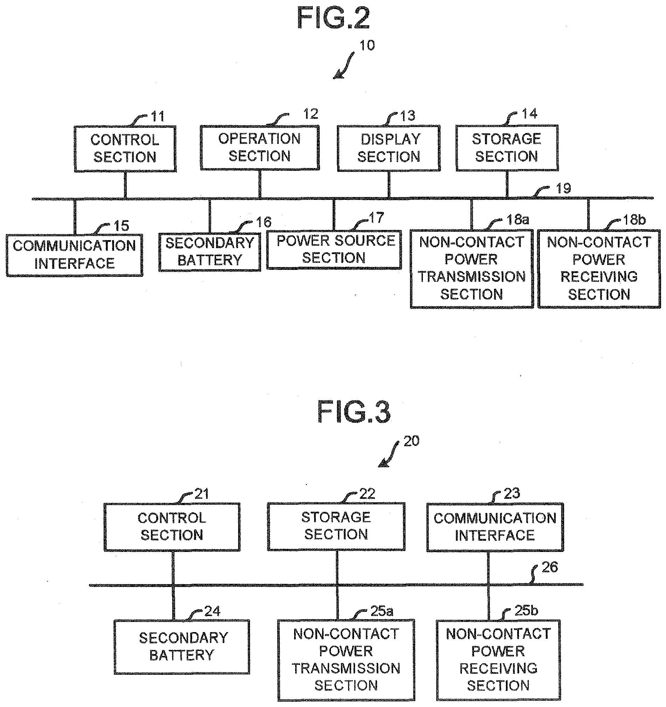

The POS terminal 10 is described first. Fig. 2 is a block diagram exemplifying the hardware structure of the POS terminal 10. As shown in Fig. 2, the POS terminal 10 comprises a control section 11 for collectively controlling various operations and each section of the POS terminal 10. The control section 11 is a computer consisting of a CPU (Central Processing Unit), a ROM (Read Only Memory), a RAM (Random Access Memory), an RTC (Real Time Clock) and so on. The ROM stores various programs and data. The RAM stores various programs temporarily and meanwhile stores various data in a rewritable manner. The RTC counts the current date and time.

The control section 11 is connected with an operation section 12, a display section 13 and a storage section 14 via a bus line 19.

The operation section 12 includes various operating keys for a user to execute an input operation. The operating keys include, for example, numeric keys, cursor keys, a selection determination key, a subtotal key and a closing key.

The display section 13 is, for example, a liquid crystal display. Moreover, the display section 13 displays various kinds of information such as the commodity name and the price of a commodity to which a sales registration is carried out, and the total amount and the change amount of a transaction of which a settlement is declared. The display section 13 may be provided with a touch panel.

The storage section 14 is an auxiliary storage device such as an HDD (Hard Disk Drive) or an SSD (Solid State Drive). The storage section 14 stores the various programs executed by the control section 11 (CPU). Further, the storage section 14 stores various data files such as a commodity data file in which the commodity data such as the commodity name, the commodity code and the unit price of each commodity is stored.

The control section 11 is connected with a communication interface 15 via the bus line 19. The control section 11 can be connected with the peripheral device 20 via the communication interface 15. Specifically, the communication interface 15 carries out communication in accordance with a standard such as Bluetooth (Registered Trademark). Further, the communication interface 15 may adopt another standard other than Bluetooth. For example, the communication interface 15 may carry out communication in accordance with a standard such as Wireless Fidelity (Registered Trademark).

Further, the control section 11 is connected with a secondary battery 16 via the bus line 19. The secondary battery 16 is capable of storing electric power through charging. The secondary battery 16 supplies electric power for each section of the POS terminal 10 at the time of power outage. The secondary battery 16 is, for example, a lithium ion battery. The secondary battery 16 may be another kind of battery other than lithium ion battery.

Further, the control section 11 is connected with a power source section 17 via the bus line 19. The power source section 17 receives electric power supplied through a power cable (not shown). The power source section 17 rectifies the supplied electric power. The power source section 17 supplies electric power for each section of the POS terminal 10. Moreover, the power source section 17 charges the secondary battery 16 with the rectified electric power.

Further, the control section 11 is connected with a non-contact power transmission section 18a via the bus line 19. The non-contact power transmission section 18a serving as a power transmission section transmits electric power charged into the secondary battery 16 to each peripheral 20 in a non-contact manner. The non-contact power supply is conducted with the use of a well-known technology .The system of the non-contact power supply may be an electromagnetic induction system, a magnetic field resonance system or another system. The POS terminal 10 may be provided with a plurality of non-contact power transmission sections 18a. It is preferred that the system of the non-contact power supply is the magnetic field resonance system if the distance between the POS terminal 10 and each peripheral device 20 ranges from dozens of centimeters to about two meters.

The magnetic field resonance system refers to a system for supplying electric power in a non-contact manner with the use of resonance phenomenon. Resonance phenomenon is a phenomenon in which objects that vibrate at the same frequency are located closely one the other and the vibration of one object makes the other object vibrate. In the magnetic field resonance system, coils as vibrating objects having the same resonant frequency are arranged at both a power transmission side from which electric power is transmitted and a power receiving side to which electric power is supplied. If being supplied with an alternating current, the coils at the power transmission side generate a vibrating magnetic field. At this time, as the resonant frequency of the coils at the power receiving side is the same as that of the coils at the power transmission side, a magnetic field is also generated around the coils at the power receiving side. Consequentially, the coils at the power receiving side can generate an induced current flowing in the coils at the power receiving side. Thus, the coils at the power transmission side can supply electric power to the coils at the power receiving side in a non-contact manner. In the magnetic field resonance system, the coils at the power transmission side are strongly coupled with those at the power receiving side mutually, and thus, a high transmission efficiency can be achieved even if the distance between the coils is increased.

Further, the control section 11 is connected with a non-contact power receiving section 18b via the bus line 19. The non-contact power receiving section 18b serving as a power receiving section receives the electric power supplied from each peripheral device 20 in a non-contact manner. The non-contact power receiving section 18b rectifies the received electric power. The non-contact power receiving section 18b charges the secondary battery 16 with the rectified power. The system of the non-contact power supply is conducted with the use of a well-known technology. The system of the non-contact power supply may be an electromagnetic induction system, a magnetic field resonance system or another system. The POS terminal 10 may be provided with a plurality of non-contact power receiving sections 18b. It is preferred that the system of the non-contact power supply is a magnetic field resonance system if the distance between the POS terminal 10 and each peripheral device 20 ranges from dozens of centimeters to about two meters.

Next, the peripheral device 20 is described. Fig. 3 is a block diagram exemplifying the hardware structure of the peripheral device 20. As shown in Fig. 3, each peripheral device 20 comprises a control section 21 for collectively controlling each section of the peripheral device 20. The control section 21 is a computer consisting of a CPU, a ROM, a RAM, an RTC and so on. The ROM stores various programs and data. The RAM stores various programs temporarily and meanwhile stores various data in a rewritable manner. The RTC counts the current date and time.

The control section 21 is connected with a storage section 22 via a bus line 26. The storage section 22 is an auxiliary storage device such as an HDD or an SSD. The storage section 22 stores the various programs executed by the control section 21 (CPU).

Further, the control section 21 is connected with a communication interface 23 via the bus line 26. The control section 21 can be connected with the POS terminal 10 via the communication interface 23. The communication interface 23 can be wirelessly connected with the POS terminal 10. Specifically, the communication interface 23 carries out communication in accordance with a standard such as Bluetooth. The communication interface 23 may adopt another standard other than Bluetooth. For example, the communication interface 23 may carry out communication in accordance with a standard such as Wireless Fidelity (Registered Trademark). The communication interface 23 adopts the same standard as the communication interface 15 of the POS terminal 10.

Further, the control section 21 is connected with a secondary battery 24 via the bus line 26. The secondary battery 24 is capable of storing electric power through charging. The secondary battery 24 supplies electric power to each section of the peripheral device 20. The secondary battery 24 is, for example, a lithium ion battery. Further, the secondary battery 24 may be another kind of battery other than lithium ion battery.

Further, the control section 21 is connected with a non-contact power transmission section 25a via the bus line 26. The non-contact power transmission section 25a serving as a power transmission section transmits electric power charged to the secondary batter 24 to the POS terminal 10 in a non-contact manner. The non-contact power supply system mentioned herein is the same as that adopted by the POS terminal 10.

Further, the control section 21 is connected with a non-contact power receiving section 25b via the bus line 26. The non-contact power receiving section 25b serving as a power receiving section receives electric power supplied from the POS terminal 10 in a non-contact manner. The non-contact power receiving section 25b rectifies the received electric power. The non-contact power receiving section 25b charges the secondary battery 24 with the rectified electric power. The non-contact power supply system mentioned herein is the same as that adopted by the POS terminal 10.

Further, the control section 21 is connected with hardware corresponding to the peripheral device 20. Specifically, if the peripheral device 20a is a printer, the control section 21 is connected with a drive motor (not shown) for conveying a receipt paper and a print head (not shown) for printing characters or figures on the receipt paper. Optionally, if the peripheral device 20b is a code scanner, the control section 21 is connected with a scanner (not shown) which optically reads a barcode or two-dimensional code attached to a commodity. Optionally, if the peripheral device 20c is a display device, the control section 21 is connected with a liquid crystal display (not shown) which displays various kinds of information to the customer. Optionally, if the peripheral device 20d is an automatic change dispensing machine, the control section 21 is connected with a depositing/dispensing section (not shown) which dispenses banknotes and coins according to the request from the POS terminal 10.

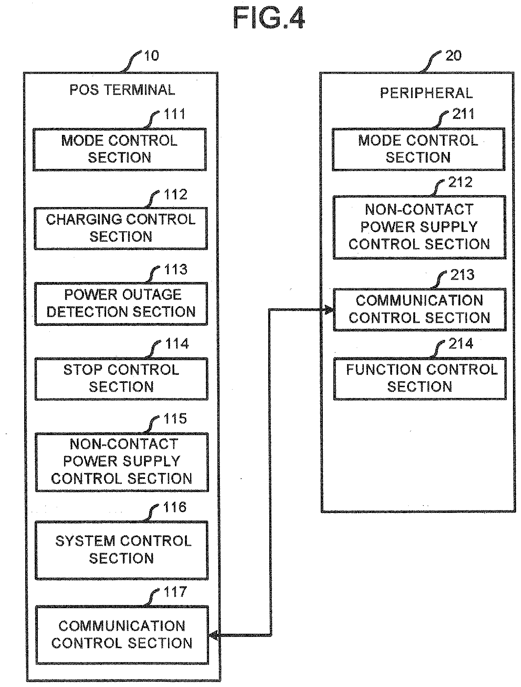

Sequentially, the functional structure of the POS system 1 is described. Fig. 4 is a diagram illustrating the functional structure of the POS system 1.

The functional structure of the POS system 10 is described first. As shown in Fig. 4, the POS terminal 10 comprises a mode control section 111, a charging control section 112, a power outage detection section 113, a stop control section 114, a non-contact power supply control section 115, a system control section 116 and a communication control section 117 as functional sections. Specifically, each functional section is generated on the RAM through the programs stored in the storage section 14 executed by the CPU of the control section 11.

The mode control section 111 controls the power supply setting of the POS terminal 10. If electric power is supplied from the power source section 17, the mode control section 111 sets the power supply setting of the POS terminal 10 to a power transmission mode. Moreover, if the electric power supply from the power source section 17 is cut off, the mode control section 111 sets the power supply setting of the POS terminal 10 to a power receiving mode.

If the power supply setting of the POS terminal 10 is set to the power transmission mode, the charging control section 112 charges, through a power cable, the secondary battery 16 with electric power supplied to the power source section 17.

The power outage detection section 113 monitors the electric power supply from the power source section 17. The power outage detection section 113 determines whether or not electric power is supplied through a power cable. In this way, the power outage detection section 113 detects the stop of the electric power supply from the power source section 17.

The stop control section 114 controls a shutdown processing of the POS terminal 10. If request for executing the shutdown processing is input through the operation section 12, the stop control section 114 stops the POS terminal 10 through the shutdown processing. Alternatively, if the power supply setting of the POS terminal 10 is set to the power receiving mode, the stop control section 114 stops the POS terminal 10 through the shutdown processing. The shutdown processing refers to a processing of stopping the POS terminal 10 by deactivating software in operation, ending a file in service, retracting the data on the RAM and turning off the power source of the POS terminal 10.

The non-contact power supply control section 115 controls the non-contact power supply of the POS terminal 10. If the power supply setting of the POS terminal 10 is set to the power transmission mode, the non-contact power supply control section 115 serving as a power transmission module transmits the electric power supplied from the power source section 17 to the peripheral device 20 through the non-contact power transmission section 18a. Further, if the power supply setting of the POS terminal 10 is set to the power receiving mode, the non-contact power supply control section 115 receives the electric power transmitted from the peripheral device 20 via the non-contact power receiving section 18b. Moreover, the non-contact power supply control section 115 serving as a charging module charges the secondary battery 16 with the received electric power.

The system control section 116 controls the non-contact power supply system relating to the POS system 1. If the power supply setting of the POS terminal 10 is set to the power receiving mode, the system control section 116 controls the peripheral device 20. Specifically, if the power supply setting of the POS terminal 10 is changed to the power receiving mode, the system control section 116 generates mode change information to be sent to the peripheral device 20. The mode change information refers to information indicating a request for the setting of the power supply setting of the peripheral device 20 to the power transmission mode.

Further, the system control section 116 generates power transmission request information to be sent to the peripheral device 20. The power transmission request information refers to information indicating a request for the transmission of electric power to the POS terminal 10. The power transmission request information includes information for designating a peripheral device 20 from which electric power is transmitted to the POS terminal 10. In this way, the POS terminal 10 charges the electric power transmitted in a non-contact manner from the designated peripheral device 20. If all the transmittable power is sent, the designated peripheral device 20 sends power transmission completion information to the POS terminal 10. At this time, an undesignated peripheral device 20 waits for the transmission of the electric power.

If receiving the power transmission completion information, the system control section 116 generates power transmission request information, designating a peripheral device 20 from which no electric power is transmitted yet. In this way, the POS terminal 10 charges the electric power transmitted from one or more peripheral devices 20 in a non-contact manner. No limitations are given to the method of selecting a peripheral device 20 which is designated according to the power transmission request information by the system control section 116. For example, the system control section 116 may select the peripheral devices 20 in a predetermined sequence or order.

The communication control section 117 controls the communication with the peripheral device 20 via the communication interface 15. In a case in which the communication interface 15 carries out communication in accordance with a standard such as Bluetooth, the communication control section 117 controls the communication with a peripheral device 20 in a pairing manner. The 'pairing' refers to a processing in which a peripheral device 20 which is communicated is associated with the POS terminal 10 to carry out communication therebetween so that the POS terminal 10 does not communicate with an irrelevant device in the vicinity thereof. In this way, the communication control section 117 associates the POS terminal 10 with the peripheral device 20 to be communicated.

Moreover, the communication control section 117 sends the mode change information and the power transmission request information to the one or more peripheral devices 20 of the POS system 1. The communication control section 117 serving as an output module outputs the mode change information and the power transmission request information to the peripheral devices 20a, 20b, 20c and 20d. Further, the communication control section 117 receives power transmission completion information from the peripheral device 20.

Sequentially, the functional structure of the peripheral device 20 is described. As shown in Fig. 4, the peripheral device 20 comprises, as functional sections, a mode control section 211, a non-contact power supply control section 212, a communication control section 213 and a function control section 214. Specifically, each functional section is generated on the RAM through the programs stored in the storage section 22 executed by the CPU of the control section 21.

The mode control section 211 controls the power supply setting of the peripheral device 20. The power supply setting of the peripheral device 20 is initially set as a power receiving mode. If receiving mode change information, the mode control section 211 sets the power supply setting of the peripheral device 20 to a power transmission mode.

The non-contact power supply control section 212 controls the non-contact power supply of the peripheral device 20. In a case in which the power supply setting of the peripheral device 20 is set to the power receiving mode, the non-contact power supply control section 212 receives the electric power transmitted from the POS terminal 10 via the non-contact power receiving section 25b. Then, the non-contact power supply control section 212 serving as a charging module charges the secondary battery 24 with the received electric power.

Further, in a case in which the power supply setting of the peripheral device 20 is set to the power transmission mode, the non-contact power supply control section 212 waits for the transmission of electric power until a peripheral device 20 for transmitting electric power to the POS terminal 10 is designated according to power transmission request information. If a peripheral device 20 for transmitting electric power to the POS terminal 10 is designated, the non-contact power supply control section 212 serving as a power transmission module transmits electric power charged to the secondary battery 24 to the POS terminal 10 via the non-contact power transmission section 25a. In a case in which the peripheral device including the non-contact power supply control section 212 is a peripheral device 20 designated according to power transmission request information, the non-contact power supply control section 212 transmits electric power charged to the secondary battery 24 to the POS terminal 10 via the non-contact power transmission section 25a.

The communication control section 213 controls the communication with the POS terminal 10 via the communication interface 23. In this case, the communication control section 213 controls the communication with the POS terminal 10 associated with the peripheral device 20 with the pairing.

Further, the communication control section 213 receives mode change information and power transmission request information from the POS terminal 10. The communication control section 213 serving as an input module receives the input of the mode change information and the power transmission request information from the POS terminal 10. Further, the communication control section 213 sends power transmission completion information to the POS terminal 10.

The function control section 214 controls the functions of the peripheral device 20. If the power supply setting of the peripheral device 20 is set to a power receiving mode, the function control section 214 uses the electric power charged to the secondary battery 24 to control the functions of the peripheral device 20.

If the power supply setting of the peripheral device 20 is set to a power transmission mode, the function control section 214 stops the functions of the peripheral device 20. Specifically, in a case where the peripheral device 20a is a printer, the function control section 214 stops the function of the peripheral device 20a with which the content of a transaction is printed on a specific paper such as a receipt paper. In a case where the peripheral device 20b is a code scanner, the function control section 214 stops the function of the peripheral device 20b with which a barcode representing a commodity code is optically read. In a case where the peripheral device 20c is a display device, the function control section 214 stops the function of the peripheral device 20c with which various kinds of information is displayed to the customer. In a case where the peripheral device 20d is an automatic change dispensing machine, a deposited amount is received but the function control section 214 stops the function of the peripheral device 20d with which money (change) is automatically dispensed according to a command (change dispensing command) from the POS terminal 10.

Sequentially, a mode change processing is described which is carried out by the control section 11 of the POS terminal 10 according to the foregoing embodiments according to a program. The mode change processing is a processing of changing a power supply setting from a power transmission mode to a power receiving mode.

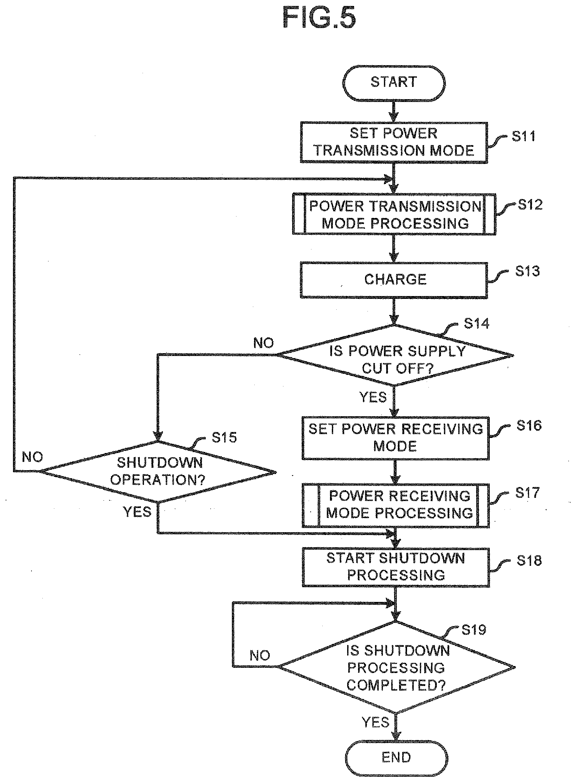

Fig. 5 is a flowchart illustrating the flow of a mode change processing carried out by the control section 11 of the POS terminal 10 according to a program.

First, upon receiving electric power from the power source section 17, the mode control section 111 of the POS terminal 10 sets a power supply setting to a power transmission mode (Act S11). Then, the control section 11 of the POS terminal 10 carries out a power transmission mode processing (Act S12). The power transmission mode processing is described in detail later. Next, the charging control section 112 of the POS terminal 10 charges the secondary battery 16 with the electric power supplied from the power source section 17 (Act S13).

Then, the power outage detection section 113 of the POS terminal 10 determines whether or not the electric power supplied from the power source section 17 is cut off (Act S14). If the electric power supplied is not cut off (Act S14: No), the control section 11 of the POS terminal 10 determines whether or not the input of a shutdown operation is detected through the operation section 12 (Act S15).

If the input of the shutdown operation is detected (Act S15: Yes), the control section 11 of the POS terminal 10 proceeds to carry out a processing in Act S18. On the other hand, if no shutdown operation is detected (Act S15: No), the control section 11 of the POS terminal 10 proceeds to carry out a processing in Act S12.

On the other hand, if the electric power supply is cut off (Act S14: Yes), the mode control section 111 of the POS terminal 10 sets the power supply setting to a power receiving mode (Act S16). Sequentially, the control section 11 of the POS terminal 10 carries out a power receiving mode processing (Act S17). The power receiving mode processing is described in detail later. Sequentially, the stop control section 114 of the POS terminal 10 starts the shutdown processing of the POS terminal 10 (Act S18).

Sequentially, the stop control section 114 of the POS terminal 10 determines whether or not the shutdown processing is completed (Act S19). If the shutdown processing is not completed (Act S19: No), the stop control section 114 of the POS terminal 10 waits for the completion of the processing in Act S19.

On the other hand, if the shutdown processing is completed (Act S19: Yes), the control section 11 of the POS terminal 10 ends the mode change processing.

Next, the abovementioned power transmission mode processing is described which is carried out by the control section 11 of the POS terminal 10 and the control section 21 of the peripheral device 20 according to the foregoing embodiments according to a program. The power transmission mode processing refers to the transmission of electric power from the POS terminal 10 to each peripheral device 20 in a non-contact manner in a power transmission mode.

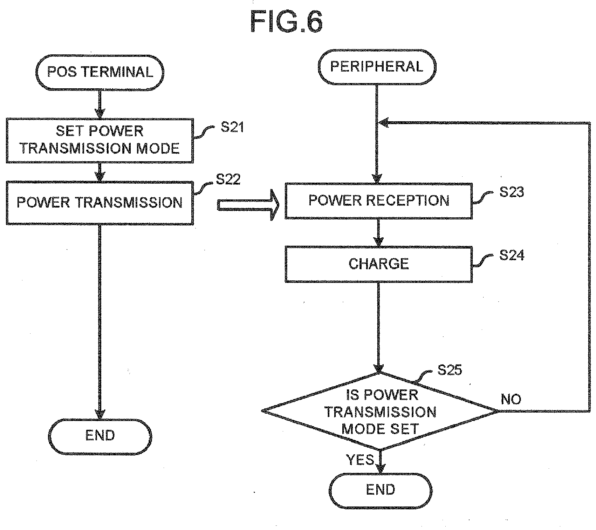

Fig. 6 is a flowchart illustrating the flow of a power transmission mode processing carried out by the control section 11 of the POS terminal 10 and the control section 21 of the peripheral device 20 according to a program. The processing shown in the flowchart of Fig. 6 starts from a state in which the POS terminal 10 sets a power supply setting thereof to a power transmission mode.

First, the mode control section 111 of the POS terminal 10 sets a power supply setting to a power transmission mode (Act S21). Then, the non-contact power supply control section 115 of the POS terminal 10 transmits the electric power supplied from the power source section 17 to the peripheral device 20 through the non-contact power transmission section 18a (Act S22).

The non-contact power supply control section 212 of the peripheral device 20 receives the electric power transmitted from the POS terminal 10 via the non-contact power receiving section 25b (Act S23). Then, the non-contact power supply control section 212 of the peripheral device 20 charges the secondary battery 24 with the received electric power (Act S24).

The non-contact power supply control section 212 of the peripheral device 20 determines whether or not the power supply setting is set to a power transmission mode (Act S25). If the power supply setting is not set to a power transmission mode (Act S25: No), the non-contact power supply control section 212 of the peripheral device 20 proceeds to carry out a processing in Act S23.

On the other hand, if the power supply setting is set to a power transmission mode (Act S25: Yes), the control section 21 of the peripheral device 20 ends the power transmission mode processing.

A power receiving mode processing is described which is carried out by the control section 11 of the POS terminal 10 and the control section 21 of the peripheral device 20 according to the foregoing embodiments according to a program. The power receiving mode processing refers to the reception of the electric power supplied from each peripheral device 20 in a non-contact manner by the POS terminal 10 in a power receiving mode.

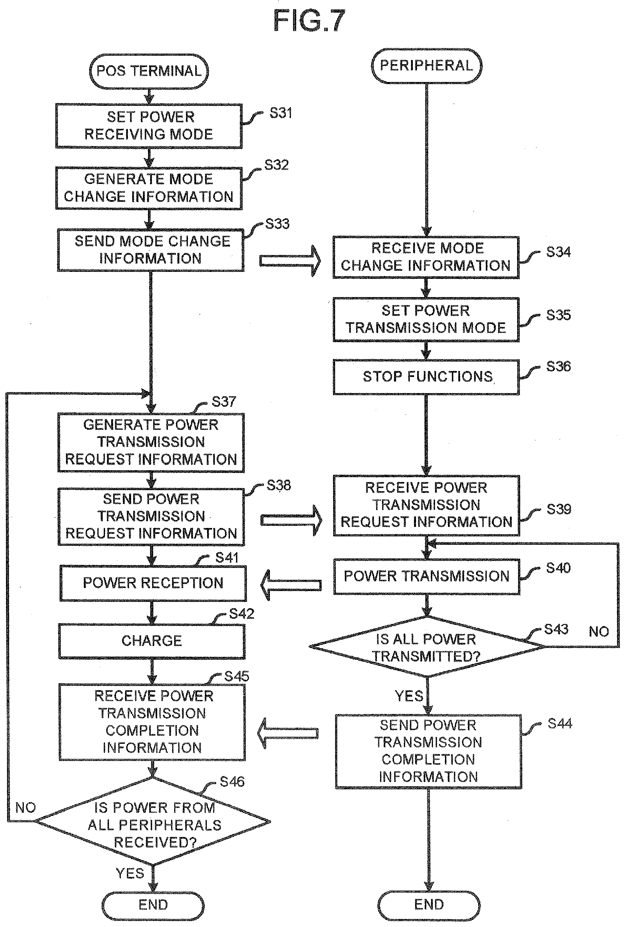

Fig. 7 is a flowchart illustrating the flow of a power receiving mode processing carried out by the control section 11 of the POS terminal 10 and the control section 21 of the peripheral device 20 according to a program. A processing shown in the flowchart of Fig. 7 starts from a state in which the POS terminal 10 sets a power supply setting thereof to a power receiving mode.

First, the mode control section 111 of the POS terminal 10 sets a power supply setting to a power receiving mode (Act S31). Then, the system control section 116 of the POS terminal 10 generates mode change information (Act S32). Sequentially, the communication control section 117 of the POS terminal 10 sends the generated mode change information to each peripheral device 20 (Act S33).

The communication control section 213 of the peripheral device 20 receives the mode change information sent from the POS terminal 10 (Act S34). Next, the mode control section 211 of the peripheral device 20 sets the power supply setting thereof to a power transmission mode (Act S35).

Then, the function control section 214 of the peripheral device 20 stops the functions of the peripheral device 20 (Act S36). Specifically, the peripheral device 20a serving as a printer stops a function with which the content of a transaction is printed on a specific paper such as a receipt paper. The peripheral device 20b serving as a code scanner stops a function with which a barcode representing a commodity code is optically read. The peripheral device 20c serving as a display device stops a function with which various kinds of information is displayed to the customer. The peripheral device 20d serving as an automatic change dispensing machine receives a deposited money but stops a function with which money (change) is automatically dispensed according to a command (change dispensing command) from the POS terminal 10.

Sequentially, the system control section 116 of the POS terminal 10 generates power transmission request information (Act S37). Then, the communication control section 117 of the POS terminal 10 sends the generated power transmission request information to the peripheral device 20 (Act S38).

Next, the communication control section 213 of the peripheral device 20 receives the power transmission request information (Act S39). Then, the non-contact power supply control section 212 of the peripheral device 20 designated according to the power transmission request information transmits electric power charged to the secondary battery 24 to the POS terminal 10 via the non-contact power transmission section 25a (Act S40).

Sequentially, the non-contact power supply control section 115 of the POS terminal 10 receives the electric power transmitted from the peripheral device 20 via the non-contact power receiving section 18b (Act S41). Then, the non-contact power supply control section 115 of the POS terminal 10 charges the secondary battery 16 with the received electric power (Act S42).

Then, the non-contact power supply control section 212 of the peripheral device 20 designated according to the power transmission request information determines whether or not all the electric power that can be transmitted to the POS terminal 10 is transmitted (Act S43). If not all the electric power is transmitted (Act S43: No), the non-contact power supply control section 212 of the peripheral device 20 proceeds to carry out a processing in Act S40.

On the other hand, if all the electric power that can be transmitted is transmitted (Act S43: Yes), the communication control section 213 of the peripheral device 20 sends power transmission completion information indicating that all the electric power that can be transmitted is transmitted (Act S44).

Then, the communication control section 213 of the POS terminal 10 receives the power transmission completion information sent from the peripheral device 20 (Act S45). The non-contact power supply control section 115 of the POS terminal 10 determines whether or not electric power from all the peripheral devices 20 is received (Act S46). If the electric power from not all the peripheral devices 20 is received (Act S46: No), the non-contact power supply control section 115 of the POS terminal 10 proceeds to carry out a processing in Act S37. The system control section 116 of the POS terminal 10 generates power transmission request information in which the next peripheral device 20 that does not send electric power yet is designated.

On the other hand, if the electric power from all the peripheral devices 20 is received (Act S46: Yes), the control section 11 of the POS terminal 10 ends the power receiving mode processing.

As stated above, according to the POS system 1 of the present embodiment, a POS terminal 10 comprises a non-contact power transmission section 18a which transmits electric power to a peripheral device 20 in a non-contact manner and a non-contact power receiving section 18b which receives the electric power transmitted from the peripheral device 20 in a non-contact manner. If the electric power is supplied through a power cable, the POS terminal 10 transmits the electric power to the peripheral device 20 via the non-contact power transmission section 18a. On the other hand, if the electric power from the power cable is cut off, the POS terminal 10 sends power transmission request information to the peripheral device 20. The peripheral device 20 is associated with the POS terminal 10 with the pairing processing. Further, the POS terminal 10 is charged with the electric power transmitted from the peripheral device 20 via the non-contact power receiving section 18b. In a case of power outage, the POS terminal 10 charges a secondary battery 16 with the electric power supplied from the peripheral device 20. The POS terminal 10 can execute a shutdown processing with the use of charged power. In this way, it is preferable that the POS terminal 10 is equipped with the secondary battery 16 of which the capacity is enough for maintaining the activation of the POS terminal 10 during the period from the cutoff of the electric power supply through a power cable to the start of the charging of the secondary battery 16 with the electric power transmitted from the peripheral device 20. Thus, the POS system 1 of the present embodiment is provided with a secondary battery 16 the external size of which is smaller compared with that in the conventional POS systems.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the scope of the invention.

According to the foregoing embodiment, the system control section 116 of the POS terminal 10 selects a peripheral device 20 which transmits electric power to the POS terminal 10 in a non-contact manner. At this time, the system control section 116 of the POS terminal 10 may select a plurality of peripheral devices 20 as the peripheral devices 20 which transmit electric power to the POS terminal 10.

Further, in the foregoing embodiment, the POS terminal 10 communicates with the peripheral device 20 via the communication interface 15. Similarly, the peripheral device 20 communicates with the POS terminal 10 via the communication interface 23. However, the communication between the POS terminal 10 and the peripheral device 20 is not limited to this. For example, the communication between the POS terminal 10 and the peripheral device 20 may make use of magnetic field resonance. The POS terminal 10 may communicate with the peripheral device 20 via the non-contact power transmission section 18a or the non-contact power receiving section 18b. Similarly, the peripheral device 20 may also communicate with the POS terminal 10 via the non-contact power transmission section 25a or the non-contact power receiving section 25b.

The programs executed by each device of the foregoing embodiments or variations of the foregoing embodiments are previously incorporated in the storage medium (e.g. the ROM or the storage section) of each device to be provided; however, the present invention is not limited to this. For example, the programs may be recorded in a computer-readable recording medium such as a CD-ROM, a Flexible Disk (FD), a CD-R and a DVD (Digital Versatile Disk) in the form of installable or executable file to be provided. Further, the storage medium, which is not limited to a medium independent from a computer or an incorporated system, further may be a storage medium for storing or temporarily storing the downloaded program transferred via an LAN or an Internet.

Further, the programs executed by each device of the foregoing embodiments or variations of the foregoing embodiments are stored in a computer connected with a network such as the Internet and downloaded via the network, or are provided or distributed via the network such as the Internet.

## Claims

1. An information processing apparatus, comprising:
a power transmission section (18a) configured to transmit electric power to a peripheral device (20) which is associated with the information processing apparatus in a non-contact manner including no mechanical connection with the peripheral device (20);
a power receiving section (18b) configured to receive electric power transmitted from the peripheral device (20) in a non-contact manner including no mechanical connection; and
a power transmission module (S11, 115) configured to transmit electric power to the peripheral device (20)_via the power transmission section if electric power is being supplied through a power cable, **characterized by** further comprising:
an output module (117) configured to output power transmission request information indicating a request for the transmission of electric power to a plurality of peripheral devices (20) in a predetermined order if the electric power supplied through the power cable is cut off; and
a charging module (115) configured to charge, via the power receiving section, a battery with the electric power transmitted from the peripheral device (20)_to which the output module (117) outputs the power transmission request information, wherein
the output module (117) is configured to output the power transmission request information designating a next peripheral device when power transmission completion information is received, the power transmission completion information indicating that all transmittable electric power is transmitted; and
the power receiving section (18b) is configured to receive electric power that is supplied from the next peripheral device (20) in a non-contact manner for completing a shutdown.

2. A non-contact power supply system, comprising:
the information processing apparatus (10) according to claim 1; and
a peripheral device (20) comprising:
a power receiving section (25b) configured to receive electric power transmitted from the information processing apparatus (10) with which the peripheral device is associated in a non-contact manner including no mechanical connection;
a power transmission section (25a) configured to transmit electric power to the information processing apparatus (10) in a non-contact manner including no mechanical connection;
a charging module (212) configured to charge, via the power receiving section, a battery with the electric power transmitted from the information processing apparatus (10);
an input module (213) configured to receive an input of power transmission request information indicating a request for the transmission of electric power output from the information processing apparatus (10); and
a power transmission module (212) configured to transmit electric power to the information processing apparatus (10) via the power transmission section when the input of the power transmission request information is received by the input module (213).

## Patentansprüche

1. Informationsverarbeitungsvorrichtung, umfassend:
einen Leistungsübertragungsabschnitt (18a), der konfiguriert ist, elektrische Leistung an ein Peripheriegerät (20) zu übertragen, das der Informationsverarbeitungsvorrichtung auf kontaktlose Weise zugeordnet ist, die keine mechanische Verbindung mit dem Peripheriegerät (20) enthält;
einen Leistungsempfangsabschnitt (18b), der konfiguriert ist, elektrische Leistung zu empfangen, die von dem Peripheriegerät (20) auf kontaktlose Weise, die keine mechanische Verbindung enthält, übertragen wird; und
ein Leistungsübertragungsmodul (S11, 115), das konfiguriert ist, über den Leistungsübertragungsabschnitt elektrische Leistung an das Peripheriegerät (20) zu übertragen, wenn über ein Netzkabel elektrische Leistung zugeführt wird;
ein Ausgangs- bzw. Ausgabemodul (117), das konfiguriert ist, Leistungsübertragungsanforderungsinformationen auszugeben, die eine Anforderung zur Übertragung von elektrischer Leistung an eine Mehrzahl von Peripheriegeräten in einer vorbestimmten Reihenfolge angeben, wenn die über das Netzkabel zugeführte elektrische Leistung unterbrochen wird; und
ein Lademodul (115), das konfiguriert ist, über den Leistungsempfangsabschnitt eine Batterie mit elektrischer Leistung zu laden, die von dem Peripheriegerät (20) übertragenen wird, an welches das Ausgangsmodul (117) die Leistungsübertragungsanforderungsinformationen ausgibt, wobei das Ausgabemodul (117) konfiguriert ist, die Leistungsübertragungsanforderungsinformationen auszugeben, die ein nächstes Peripheriegerät angeben, wenn Leistungsübertragungsbeendigungsinformationen empfangen werden,
wobei die Leistungsübertragungsbeendigungsinformationen angeben, dass jegliche übertragbare elektrische Leistung übertragen wurde; und
wobei der Leistungsempfangsabschnitt (18b) konfiguriert ist, elektrische Leistung zu empfangen, die von dem nächsten Peripheriegerät (20) auf kontaktlose Weise zugeführt wird, um eine Abschaltung zu beenden.

2. Kontaktloses Leistungsversorgungssystem, umfassend:
die Informationsverarbeitungsvorrichtung (10) nach Anspruch 1; und
ein Peripheriegerät (20), umfassend:
einen Leistungsempfangsabschnitt (25b), der konfiguriert ist, elektrische Leistung zu empfangen, die von der Informationsverarbeitungsvorrichtung (10), mit der das Peripheriegerät (20) verknüpft ist, auf kontaktlose Weise, die keine mechanische Verbindung enthält, übertragen wird;
einen Leistungsübertragungsabschnitt (25a), der konfiguriert ist, elektrische Leistung an die Informationsverarbeitungsvorrichtung (10) auf kontaktlose Weise, die keine mechanische Verbindung enthält, zu übertragen;
ein Lademodul (212), das konfiguriert ist, über den Leistungsempfangsabschnitt eine Batterie mit der elektrischen Leistung zu laden, die von der Informationsverarbeitungsvorrichtung (10) übertragen wird;
ein Eingangs- bzw. Eingabemodul (213), das konfiguriert ist, eine Eingabe von Leistungsübertragungsanforderungsinformationen zu empfangen, die eine Anforderung zur Übertragung von elektrischer Leistung angeben, die von der Informationsverarbeitungsvorrichtung (10) ausgegeben wird; und
ein Leistungsübertragungsmodul (212), das konfiguriert ist, über den Leistungsübertragungsabschnitt elektrische Leistung an die Informationsverarbeitungsvorrichtung (10) zu übertragen, wenn die Eingabe der Leistungsübertragungsanforderungsinformationen von dem Eingabemodul (213) empfangen wird.

## Revendications

1. Dispositif de traitement d'information, comprenant :
une section de transmission d'énergie (18a) configurée de manière à transmettre de l'énergie électrique à un dispositif périphérique (20) qui est associé au dispositif de traitement d'information d'une manière sans contact ne comportant aucune liaison mécanique avec le dispositif périphérique (20) ;
une section de réception d'énergie (18b) configurée de manière à recevoir de l'énergie électrique transmise à partir du dispositif périphérique (20) d'une manière sans contact ne comportant aucune liaison mécanique ; et
un module de transmission d'énergie (S11, 115) configuré de manière à transmettre de l'énergie électrique au dispositif périphérique (20) par l'intermédiaire de la section de transmission d'énergie si l'énergie électrique est délivrée au moyen d'un câble électrique, **caractérisé par le fait qu'**il comprend, en outre :
un module de sortie (117) configuré de manière à délivrer des informations de demande de transmission d'énergie indiquant une demande de transmission d'énergie électrique à une pluralité de dispositifs périphériques (20) suivant un ordre prédéterminé si l'énergie électrique délivrée au moyen du câble de puissance est interrompue ; et
un module de charge (115) configuré de manière à charger, par l'intermédiaire de la section de réception d'énergie, une batterie avec l'énergie électrique transmise à partir du dispositif périphérique (20) auquel le module de sortie (117) délivre les informations de demande de transmission d'énergie, dans lequel
le module de sortie (117) est configuré de manière à délivrer les informations de demande de transmission d'énergie désignant un dispositif périphérique suivant lorsque les informations d'achèvement de transmission d'énergie sont reçues, les informations d'achèvement de transmission d'énergie indiquant que toute l'énergie électrique pouvant être transmise a été transmise ; et
la section de réception d'énergie (18b) est configurée de manière à recevoir de l'énergie électrique qui est délivrée à partir du dispositif périphérique (20) suivant d'une manière sans contact afin d'achever une séquence d'arrêt.

2. Dispositif d'alimentation en énergie sans contact, comprenant :
le dispositif de traitement d'information (10) selon la revendication 1, et
un dispositif périphérique (20) comprenant :
une section de réception d'énergie (25b) configurée de manière à recevoir de l'énergie électrique transmise à partir du dispositif de traitement d'information (10) avec lequel le périphérique est associé d'une manière sans contact ne comportant aucune liaison mécanique ;
une section de transmission d'énergie (25a) configurée de manière à transmettre de l'énergie électrique au dispositif de traitement d'information (10) d'une manière sans contact ne comportant aucune liaison mécanique ;
un module de charge (212) configuré de manière à charger, par l'intermédiaire de la section de réception d'énergie, une batterie avec l'énergie électrique transmise à partir du dispositif de traitement d'information (10) ;
un module d'entrée (213) configuré de manière à recevoir une entrée d'informations de demande de transmission d'énergie indiquant une demande de transmission d'énergie électrique délivrée à partir du dispositif de traitement d'information (10) ; et
un module de transmission d'énergie (212) configuré de manière à transmettre de l'énergie électrique au dispositif de traitement d'information (10) par l'intermédiaire de la section de transmission d'énergie lorsque l'entrée des informations de demande de transmission d'énergie est reçue par le module d'entrée (213).
